(19)

Europäisches
Patentamt
European
Patent Office
Office européen
des brevets

(11) **EP 3 657 211 A1**

(12) **EUROPEAN PATENT APPLICATION**

(43) Date of publication:
**27.05.2020 Bulletin 2020/22**

(51) Int Cl.:
***G01S 13/90*** *(2006.01)*

(21) Application number: **18207244.7**

(22) Date of filing: **20.11.2018**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN** | • **Kuznetsov, Victor**<br>  **2700 Wiener Neustadt (AT)**<br>• **Leushev, Yury**<br>  **2700 Wiener Neustadt (AT)**<br>• **Nezhdanov, Ivan**<br>  **2700 Wiener Neustadt (AT)**<br>• **Tselousov, Aleksandr**<br>  **2700 Wiener Neustadt (AT)** |
| (71) Applicant: **Evosar Technologies GmbH**<br>**2700 Wiener Neustadt (AT)** | (74) Representative: **Papula Oy**<br>**P.O. Box 981**<br>**00101 Helsinki (FI)** |
| (72) Inventors:<br>• **Gurianov, Maksim**<br>  **2700 Wiener Neustadt (AT)** | |

(54) **METHOD AND SYSTEM FOR ESTIMATION OF FLIGHT-PATH INSTABILITIES OF THE AIR VEHICLE**

(57) This technical solution generally refers to the field of computer technology, and in particular to methods for estimating flight-path instabilities (EFPI) intended for use in radar image synthesis systems. A method for estimating the air vehicle flight-path instabilities, in which at least one radio hologram from the radar is obtained on at least one server, the hologram being a two-dimensional array consisting of complex numbers; the phase increments for each two adjacent columns of the hologram obtained at the previous step are estimated by the server; the range increments based on the previously determined by the server estimates of the phase increments for the hologram, are calculated; the increments of the air vehicle displacement coordinates are determined by the criterion of the mean square of the approximation error in order to approximate the range increments obtained earlier; the coordinates of the air vehicle displacement are determined by summing all the increments of the air vehicle displacement coordinates obtained at the previous step. The technical result is the improvement of radar image quality on any air vehicle in the event of strong flight-path instabilities, as well as an increase in the reliability of the on-board radar complex.

Fig. 1

**Description**

TECHNICAL FIELD

This technical solution, in general, refers to the field of computer technology, and in particular to methods and systems for estimating the flight-path instabilities (FPI) of an air vehicle intended for use in radar image synthesis systems.

BACKGROUND OF THE INVENTION

The effect of the flight-path instabilities of an air vehicle (aircraft, drone) of radar stations with the synthesis of the antenna aperture (SAR) on the quality of radar images (hereinafter - RI) is well known in the background.

At present, accurate knowledge of the motion law of the phase center of the antenna complex is required to obtain a high-quality radar image (image obtained from a synthetic aperture radar, hereinafter - SAR) from an air vehicle. This is necessary, because the synthesis of the aperture is based on the principle of studying the movement of targets in time, which is detected by the device. Accurate knowledge of the air vehicle flight-path makes it possible to divide the signal change due to the movement of the target and the signal change due to the movement of the carrier itself.

Historically, this problem is solved by the following technical solutions, depending on the type of air vehicle.

In space vehicles, SAR are used, since they fly along an ideal flight-path without turbulence. Before the computer era, this was the main method and the data was recorded on a magnetic tape, and then was dropped by "capsules".

In large air vehicles, for example, aircrafts, the problem is solved by installing a laser micronavigation system (which is 150 kg or more) and the finest laser gyroscopes.

In modern air vehicles (for example, in the aircrafts of Su™ and Mig™ series), the flight-path instabilities are simply ignored, due to sufficiently high speeds of movement. The resolution of such complexes due to this fact is very low (about 3-5 meters per pixel).

One of the difficulties in processing data obtained from the SAR of an air vehicle is the possible migration of signals from the object being read based on range within the hologram.

The possible deviation $\Delta R$ (vector of deviations of the flight-path instabilities) leads to an error in knowledge of the inclined range $dL < \Delta R$ to the read point of the surface ($dL$- the distance to the object to be read, which depends on the viewing angle). $dL$ The error can be greater than the indication step of the analog-to-digital converter (hereinafter - ADC) based on the range. The signal from the point target can be shifted along the hologram to $dm$ ADC indications by range, where $dm$ is proportional to $dL$. This results in the fact that during the synthesis of the image the peak of the signal does not fall into the calculated line mby the range and does not contribute to the formation of the RI point (n, m).

In the prior art, two main types of hologram migration based on the range are distinguished:

1) Migration caused by the uniform deviation of an air vehicle from the calculated straight-line flight-path with a certain constant speed. Such migration causes the Doppler signal spectrum to shift on the hologram G (n, m).

2) Migration caused by high-frequency vibration of the antenna phase center according to a complex law with an amplitude exceeding half the value of reading of the hologram by range. The reason for such oscillations can be:

- free oscillations of the air vehicle body;
- oscillations of the air vehicle body caused by gusts of wind and an incoming air flow;
- air flow turbulence;
- course corrections performed by the pilot of the air vehicle;
- insufficiently rigid fastening of the receiving-transmitting antenna to the air vehicle body.

Both types of hologram migration by the range can be manifested both separately and simultaneously. The first type is easily detected by the shift of the Doppler spectrum of the hologram signal during the aperture set. The second type can be detected from the data of on-board navigation instruments, which allow one to estimate the deviation of the air vehicle from the calculated flight-path. However, onboard navigation instruments have limited accuracy, which negatively affects the potential for correcting the hologram G (n, m).

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

An object of this technical solution is to address at least some disadvantages common to the solutions known from the prior art.

The technical task or technical problem solved in this technical solution is to obtain information about the coordinates of the displacement of the air vehicle from the initial radar data.

The technical result, which includes the solution of the above technical task, is the improvement of the quality of the radar image obtained on an air vehicle for example in the event of strong flight-path instabilities, as well as the increase in the reliability of the on-board radar complex.

An additional technical result achieved in the solution of the above problem is the provision of the possibility of using SAR on small air vehicles, for example, on drones.

Additionally, the energy consumption of the air vehicle and the weight of the complex are reduced, and the requirements to the equipment mounting points are reduced, due to the fact that there is no need to make the distance from inertial navigation to the antenna as a minimal one.

Said technical result is achieved due to the implementation of the method for estimating the flight-path instabilities of an air vehicle, in which at least one radio hologram is obtained from at least one server from the radar, the hologram being a two-dimensional array of complex numbers; the phase increments for each two adjacent columns of the hologram obtained in the previous step are estimated with the server; the range increments are calculated based on the previously determined by the server estimates of the phase increments for the hologram; the increments of the coordinates of the displacement of the air vehicle are determined by the criterion of the mean square of the approximation error in order to approximate the range increments obtained earlier; the coordinates of the displacement of the air vehicle are determined by summing all the increments of the coordinates of the air vehicle displacement obtained at the previous step.

In some embodiments of the invention the method is carried out in a real-time mode.

In some embodiments of the invention the radio hologram is obtained from a disk subsystem configured to store radio holograms.

In some embodiments of the invention the radio hologram compressed by range is obtained after compression by range, or an initial hologram recorded by the synthetic aperture radar is obtained (SAR).

In some embodiments of the invention the radio hologram is preliminarily compressed by range.

In some embodiments of the invention the server is installed locally on the air vehicle or remotely.

In some embodiments of the invention the method is carried out in a sequence of steps, each step corresponding to an emission period of direct impulses of the SAR.

In some embodiments of the invention when estimating phase increments for each pair of adjacent columns in the two-dimensional array, the Finap method is used.

In some embodiments of the invention when determining the coordinates of displacement of the air vehicle, the coordinates of displacement of the air vehicle are smoothed against noise fluctuations.

In some embodiments of the invention when determining the coordinates of displacement of the air vehicle, error accumulation effect is eliminated.

In some embodiments of the invention potential phase jumps by $2\pi$ are corrected after estimating the phase increments.

In some embodiments of the invention when determining the coordinates of displacement of the air vehicle, low frequencies are suppressed in the air vehicle displacement coordinates.

BRIEF DESCRIPTION OF THE DRAWINGS

The features and advantages of this technical solution will be evident from the following detailed description and attached drawings where:

Fig. 1 shows an example of the implementation of a method for estimating the flight-path instabilities of an air vehicle in the form of a block diagram.

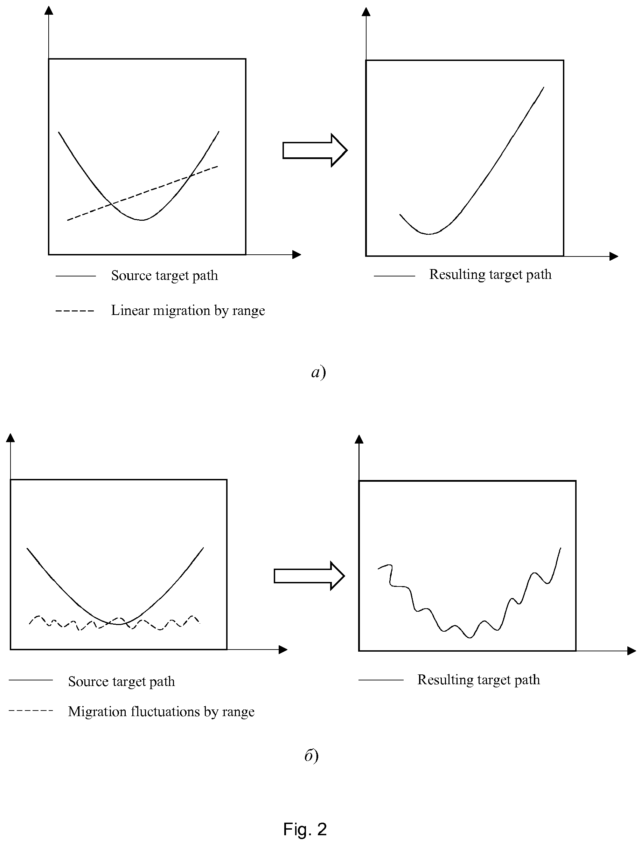

Fig. 2 shows an implementation example of the effect of hologram migration by range on the target flight-path of the object being read, and also:

a) the effect of uniform migration;
b) the effect of antenna oscillations.

Fig. 3 shows an example of the implementation of the coordinate system of flight-path instabilities in a plane perpendicular to the air vehicle flight-path.

Fig. 4 shows a general block diagram of a method for estimating the flight-path instabilities of an air vehicle.

Fig. 5 shows an implementation example of the measured phase jump value (qualitative figure), where * are measured phase values; $\times$ is the true phase value for measurement No. 2.

Fig. 6 shows an implementation example of the ambiguity of the procedure for correcting phase jumps (qualitative drawing), where * are the right results of phase jumps correction; × are the wrong results of phase jumps correction.

Fig. 7 shows a hardware complex of the system for estimating the flight-path instabilities of an air vehicle, which comprises a computational complex, capable of processing and controlling, as well as an active phased antenna array (APAA).

Fig. 8 shows an example of displaying a radio hologram obtained from a radar.

DETAILED DESCRIPTION OF THE INVENTION

This technical solution can be implemented on a computer or another data processing device in the form of an automated system or a machine-readable medium including commands for the execution of the above-mentioned method.

The technical solution can be implemented in the form of a distributed computer system (centralized or decentralized), the components of which are cloud or local servers.

In this solution, a system means a computer system or an automated system (AS), an electronic computing machine (ECM), numeric control (NC), a programmable logic controller (PLC), a computer-assisted command system and any other devices capable of performing a specified, clearly defined sequence of calculation operations (actions, commands).

A command processing device means an electronic unit or an integrated circuit (microprocessor) which performs computer-based commands (programs).

The command processing device reads and performs computer-based commands (programs) from one or more data storage devices. A data storage device can represent hard disk drives (HDD), flash memory, read-only memory (ROM), solid-state drives (SSD), optical disc drives (ODD), cloud storages, etc.

A program is a sequence of commands to be performed by a computer control device or a command processing device.

The direct impulse is an acoustic impulse emitted by the electroacoustic transducer in the direction of the control object.

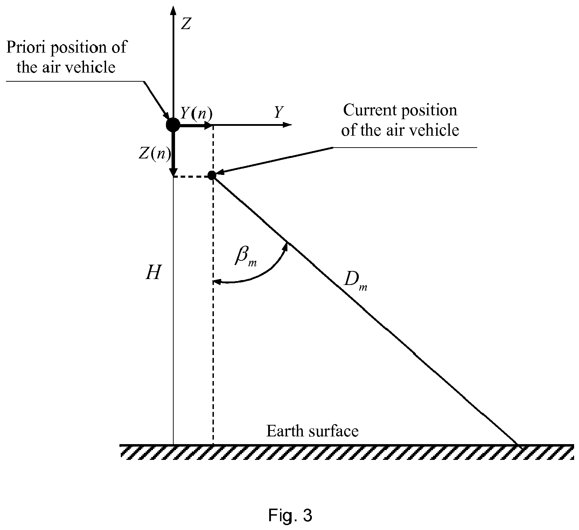

This technical solution estimates the current orthogonal displacements of the AV (hereinafter - the air vehicle) by means of a computer, in a plane perpendicular to the flight-path of the air vehicle (as shown in Figure 3):

$$Z(n) \text{ and } Y(n), \quad n = 0,1,...,(N-1),$$

where:

$Z(n)$ - the air vehicle displacement by altitude (in meters);
$Y(n)$ - the air vehicle displacement (in meters) by the range (parallel to the earth's surface), relative to an priori position of the air vehicle;
N - number of the direct impulse of radar operation.

Knowing the values $Z(n)$ and $Y(n)$, the initial data (the initial radio hologram) of the air vehicle is adjusted in such a way as if the flight-path instabilities were always equal to zero. This allows the use of classical algorithms for the synthesis of SAR, known from the prior art. This also allows the use of existing software and hardware solutions for the aperture synthesis, while not reducing the potential spatial resolution of the complex.

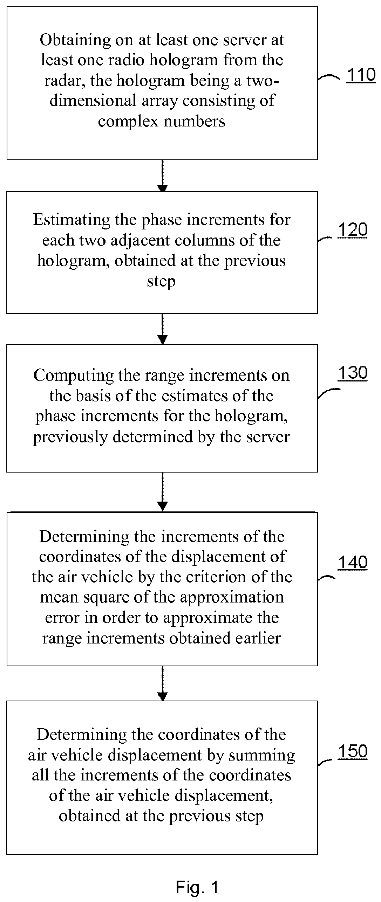

The method for estimating the flight-path instabilities of an air vehicle, shown in the form of a block diagram in Figure 1, is implemented as follows.

**Step 110:** obtaining on at least one server at least one radio hologram from the radar, the radio hologram being represented by a two-dimensional array comprising columns of complex numbers.

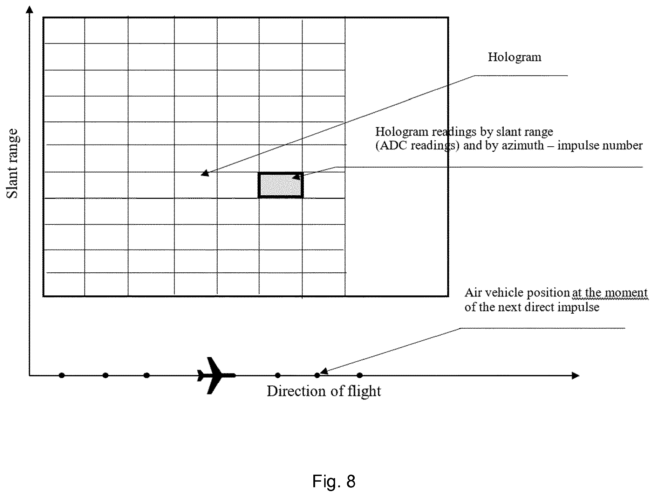

The technical solution functions on the basis of the analysis of the data recorded by the SAR module of the radio hologram (hereinafter - the hologram), as shown in Fig. 8, which can be represented as the following two-dimensional array of data:

$$G(n,m) = \{g(n,m), \quad n = 0,1,...,(N-1); \quad m = 0,1,...,(M-1)\}, \quad (1)$$

where: $g(n,m)$ - complex hologram element;

$$g(n,m) = I(n,m) + j \cdot Q(n,m);$$

$$j = \sqrt{-1}.$$

$I(n,m)$, $Q(n,m)$ - quadrature components of the element $g(n,m)$;

$n$ - the number of the direct impulse of the SAR;

$m$ - the number of signal counting by analog-to-digital converter (ADC);

$N$ - the size of the hologram by the number of the direct impulse (by azimuth);

$M$ - the size of the hologram according to the ADC signal reading number (by range).

The number of the direct impulse of the SAR is calculated from the beginning of the data recording by the radar set in the air vehicle. The number of the direct impulse is used to measure the time elapsed since the start of the device. This value takes integer values from 0 to infinity (for example, up to 1 mln).

The reading number of the ADC signal based on the slant range means the time delay between the pulse emission and receiving or simply the distance from the carrier to the target. This value takes integer values from 0 to infinity (for example, up to 100 000).

The initial data for further work are the acquisition by SAR of complex radar images, represented in the form of amplitude and phase images. In some embodiments of the invention, the input data is processed by correction to eliminate hardware distortion and is reduced to a standard (normalized) form.

In some embodiments of the invention, radiograms are obtained from the disk subsystem in which they were previously stored.

In some embodiments of the technical solution, a radio hologram can be used as input data both before and after the compression by range (in other words "pulse compression"). The signal compression by range is a process of detecting a signal (compressing of a long pulse into a short digital peak, so that it becomes more powerful and better visible). The compression is carried out by radar equipment.

The method is performed step-by-step (as shown in Fig. 1), with a step equal to the emission period of the direct impulses of the SAR. The emission period can take values from 1 to 0.0001 seconds.

For the $n$-th step one submits on the input of the computer, which can be implemented with hardware or software on the server, two adjacent columns of the hologram, representing a two-dimensional array of complex numbers:

$$g(n-1,m) \text{ and } g(n,m), \quad m = 0,1,...,(M-1). \quad (3)$$

In addition, with the SAR parameters (such as: $H$, $\lambda$, $c$, $f_{AU,\Pi}$) this technical solution can also use the following own parameters.

The type of input that determines the type of input hologram:

　◦ hologram, after compression by range (the main embodiment), or
　◦ initial hologram recorded by the SAR.

Another parameter is the number of hologram bands along the range (K) to which it is divided to further estimate the phase increments (1 < $K$ 100), which will be described below. The specific choice of the value $K$, apart from considerations of the complexity of the technical solution, is a compromise between the requirements:

　◦ a large number of ADC readings in the band (to suppress the noise errors of the phase increment estimate), and
　◦ relatively small variations (within the band) of the angle over the range.

The (pre) recommended value $K$ can be the following

$$K \approx \frac{\phi_{\Pi}}{2^{\square} \div 3^{O}},$$

where: $\phi_{\Pi}$ - the angular width of the directional response (hereinafter - DR) of the transmit and transceiver antennas by range.

Another parameter is the dispersion of the electronic noise at the output of the channel of the quadrature detector (QD) of the SAR receiver ( $\sigma_n^2(n)$ ). This parameter depends on the number of the direct impulse $n$ of the radar due to the operation of the automatic gain control (AGC) system. Dispersion is expressed in the ADC readings. In an exemplary embodiment, this value may be 10 of 256 (8 bits of ADC). Depending on the ADC bitness, the values can be different.

Also as a parameter, the interval size $dN$ (by the number of the radar direct impulse) can be used, on which the mean values the orthogonal displacements of the air vehicle are estimated.

**Step 120:** estimating by the server phase increments for each pair of adjacent columns in the two-dimensional array.

Then, based on these data, the phase increments are estimated.

At this step, the increment of the phases (hologram columns) $\Delta\Phi(n,k)$ for $K$ the angles by the range of the SAR $\beta_{Dk}$ (for $K$ hologram bands by range) is estimated by the following formula:

$$\Delta\Phi(n,k) = \begin{cases} Arctg\left(\dfrac{Q_k}{I_k}\right), & npu: I_k \geq 0; \\[2em] Arctg\left(\dfrac{Q_k}{I_k}\right) - \pi, & npu: I_k < 0, Q_k < 0; \\[2em] Arctg\left(\dfrac{Q_k}{I_k}\right) + \pi, & npu: I_k < 0, Q_k > 0, \end{cases} \tag{4}$$

where

$$I_k = \sum_{m=\frac{M}{K}\cdot(k-1)}^{\left(\frac{M}{K}\cdot k\right)-1} W(m)\cdot\left(I(n,m)\cdot I(n-1,m) + Q(n,m)\cdot Q(n-1,m)\right), \tag{4.1}$$

$$Q_k = \sum_{m=\frac{M}{K}\cdot(k-1)}^{\left(\frac{M}{K}\cdot k\right)-1} W(m)\cdot\left(Q(n,m)\cdot I(n-1,m) - I(n,m)\cdot Q(n-1,m)\right) \tag{4.2}$$

where:

K - the number of angles by range, $\beta_{Dk}$ for which the phase increment estimates are performed (algorithm parameter); $W(m)$ = 1.3 - weight coefficients determined experimentally.

In this case, the angle values by range $\beta_{Dk}$ corresponding to $\Delta\Phi(n,k)$ are determined from the formula:

$$\beta_{Dk} = Arc\cos\left(\frac{H}{D_k}\right), k = 1, 2, \ldots, K, \tag{5}$$

where:

$H$ - the altitude of the airvehicle above the earth surface;

$D_k$ - sloping range corresponding to the angle $\beta_{Dk}$:

$$D_k = \dfrac{c \cdot t_Z}{2} + \dfrac{c}{2 \cdot f_{A\text{ЦП}}} \cdot \left(\dfrac{M}{K}\right) \cdot (k - 0.5) \;; \qquad (6)$$

$c$ - light velocity;
$t_z$ - time delay from the moment of time of emission of the direct impulse to the first ($n = 0$) reading of the ADC signal;
$f_{AU,\Pi}$ - sampling frequency of the ADC signal.

It was previously disclosed that the hologram elements $g(n\text{-}1,m)$ and $g(n,m)$ are complex numbers that can be represented in an exponential form:

$$g(n-1,m) = R(n-1,m) \cdot e^{j\Phi(n-1,m)},$$

$$g(n,m) = R(n,m) \cdot e^{j\Phi(n,m)},$$

where:
$R$ and $\Phi$ - respectively, the modulus and phase of a complex number $g = I + j \cdot Q$

$$R = \sqrt{I^2 + Q^2}, \qquad \Phi = Arctg\left(\dfrac{Q}{I}\right);$$

Therefore, the required phase difference of the adjacent (by the number of the direct impulse of the radar) elements of the hologram is determined as follows by means of a computer:

$$\Delta\Phi(n,m) = \Phi(n,m) - \Phi(n-1,m)$$

The required phase difference can be obtained by first calculating the product of the value $g(n,m)$ by the complex conjugate value from g($n$-1,$m$), denoted by $g^*(n\text{-}1,m)$,

$$g(n,m) \cdot g^*(n-1,m) = R(n,m) \cdot R(n-1,m) e^{j(\Phi(n,m) - \Phi(n-1,m))},$$

and by then determining the phase of the obtained product from a formula analog to (4).
In some embodiments of the invention, to estimate the average (by band) phase difference, the phase differences over all readings of the ADC within the band are averaged (for example, with weight coefficients $R(n,m) \cdot R(n\text{-}1,m)$).
However, this method is very complex, as for all ADC readings within the band, it is required to calculate the function $Arctg()$ by means of a computer. Therefore, in an exemplary embodiment of the technical solution, a less complex method of Finap (known from the source of information [1]) is used, in which the products $g(n,m) \cdot g^*(n\text{-}1,m)$ are first averaged (inside the band), and then the function $Arctg()$ is calculated once (per band).
In some embodiments of the technical solution, after determining the phase increment estimate, the possible phase jumps to $2\pi$ (due to the periodicity of the phase estimate) are corrected in the obtained values $\Delta\Phi(n,k)$ as follows:

If $\Delta\Phi(n,k)\text{-}\Delta\Phi(n,k\text{-}1))>+\pi$, then $\Delta\Phi(n,k)=\Delta\Phi(n,k)\text{-}2\pi$,
if $\Delta\Phi(n,k)\text{-}\Delta\Phi(n,k\text{-}1))<\text{-}\pi$, then $\Delta\Phi(n,k)=\Delta\Phi(n,k) + 2\pi$,

As a result of correction of phase increments based on the previous formula, the following condition must be fulfilled:

$$\left| \Delta\Phi(n,k) - \Delta\Phi(n,k-1) \right| \le \pi \, , \, k = 2, \, ..., \, K. \qquad\qquad (7)$$

where:

$|x|$ - absolute value $x$.

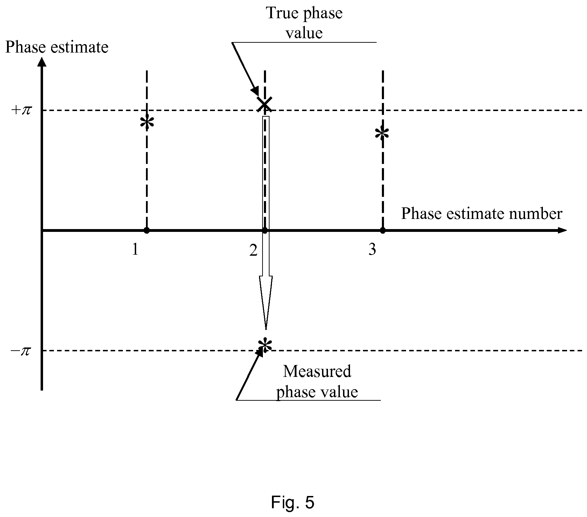

Fig. 5 shows an example of three consecutive phase estimates, when its values are close to $+\pi$. Phase estimates No.1 and No. 3 are correct. However, for the estimate No. 2, there is a phase jump by the value $2\cdot\pi$ (relative to the true value of the phase due to the periodicity of the function *Arctg*()). The phase jump is shown by the arrow in Fig. 5. The elimination of this jump from the formula (7) results in a correct estimate of the phase in the measurement No. 2.

The phase is estimated for each number of the direct impulse of the radar.

Since all of the above formulas use phase measuring functions that are trigonometric (it is obvious, for example, that there is no difference between an angle of 1 degree and an angle of 361 degrees), additional data filtration is necessary.

To do this, the possible ambiguity of the procedure for correcting the phase jumps is eliminated from the formula:

If $\dfrac{1}{K}\sum_{k=1}^{K} \Delta\Phi(n,k) \; > \; +\pi$ , then $\Delta\Phi(n,k) = \Delta\Phi(n,k) - 2\pi$, k = 2, ..., K;

If $\dfrac{1}{K}\sum_{k=1}^{K} \Delta\Phi(n,k) \; < \; -\pi$ , then $\Delta\Phi(n,k) = \Delta\Phi(n,k) + 2\pi$, k = 2, ..., K.

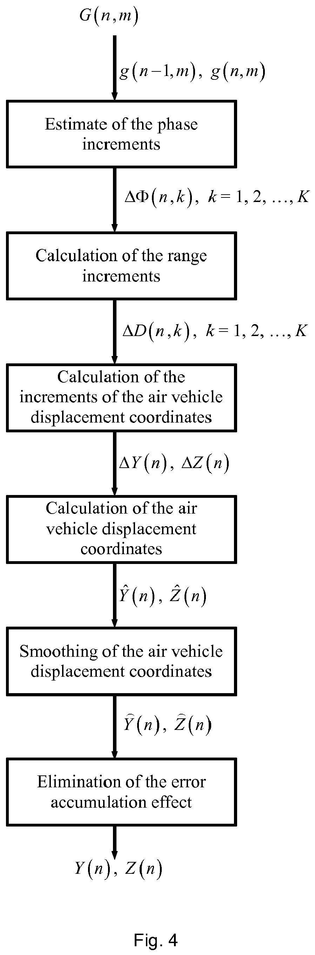

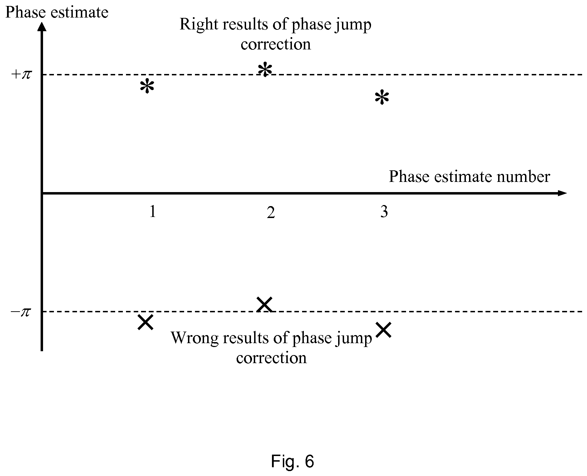

Fig. 6 shows an example of two possible results of correction of phase jumps by the previous formula. The phase estimates in the range of values $+\pi$ (indicated by asterisks in figure 4) are correct, and the phase estimates in the range of values $-\pi$ (indicated in oblique crosses in figure 4) are incorrect.

In some embodiments of the invention, the displacements (for example, the ones caused by the electronic noise of the SAR receiver) are compensated for in the phase increment estimates by the formula $\Delta\Phi(n,k)$:

$$\Delta\Phi\left(n,k\right) = \left(1 + SNR_k^{-1}\right)\cdot\Delta\Phi(n,k), \qquad k = 1, \, 2, \, ..., \, K,$$

where:

$SNR_k$ - the current estimate of the signal-to-noise ratio (in terms of power) for the $k$-th band, which is measured in decibels:

$$SNR_k = \left( \frac{1}{2\sigma_n^2(n)} \sum_{m=\frac{M}{K}(k-1)}^{\left(\frac{M}{K}\cdot k\right)-1} \left( I^2\left(n,m\right) + Q^2\left(n,m\right) \right) \right) \div \left( \frac{M}{K} \right) \; ,$$

$\sigma_n^2\left(n\right)$ - the dispersion of the electronic noise at the output of the channel of the quadrature detector of the SAR receiver.

To better understand the functionality of the technical solution, a specific implementation example with a radar is discussed below.

Preliminary, a dispersion equal to 10 out of 128 is obtained. The average value I and Q on the hologram is 55 out of 128. The number of ADC readings in the hologram ytakes the value of 100000. The parameter $K$ is selected, for example, as equal to 10 (the opening angle by range according to the definition of K from the input data is 30 degrees. From the formula (the angle is divided by 3), we get 10).

The number of the band of interest by range (k) is selected in the interval from 1 to K, for example, equal to 5.

After insertion into the formula, the signal/noise estimate is obtained as:

$$SNR_5 = \left( \frac{1}{2 \cdot 100} \sum_{m=20000}^{30000} \left( 55^2 + 55^2 \right) \right) \div (10000) = 30.25 \ dB$$

The presence of electronic noises in the SAR receiver results in the fact that the estimates of the phase increments, determined from the formula (4), are biased, i.e. on the average they are less than the increments of the phases of the useful signal. Electronic noises appear due to thermal processes in microcircuits, for example, radar. Indeed, let the signal $\xi(t)$ registered by the SAR be equal to the sum of the useful signal $C(t)$ and the electronic noise $n(t)$:

$$\xi(t) = C(t) + n(t).$$

Since the phase increment is related to the frequency of the recorded signal by a linear operation (the phase increment is equal to the integral of the frequency), the measured phase increment also turns out to be shifted (relative to the increment of the useful signal phase) by the factor:

$$\left( 1 + SNR^{-1} \right).$$

**Step 130:** computing range increments on the basis of the previously estimated phase increments for each pair of adjacent columns in the two-dimensional array.

At the next step of the method functioning, the range increments are calculated based on the previously determined phase increment estimate.

Calculation of the range increments $\Delta D(n,k)$ corresponding to the increments of phases $\Delta\Phi(n,k)$ is performed according to the following formula:

$$\Delta D(n,k) = -\frac{1}{2} \left( \frac{\lambda}{2\pi} \right) \cdot \Delta\Phi(n,k), \quad k = 1, 2, ..., K, \quad (8)$$

where:

$\lambda$ - the wavelength of the probing emission of the SAR.

It is known that the phase increment of the useful signal detected by the SAR, formed by the dispersion of probing emission at the objects of the earth surface, is caused mainly by a change (increment) of the slant range to these objects (due to the flight-path instabilities of the air vehicle).

As shown in Fig. 3, the values $\Delta D(n,k)$ obtained from the formula (8) are related to the increments of the orthogonal displacements of the air vehicle $\Delta Y(n)$ and $\Delta Z(n)$ from the formula:

$$\Delta D(n,k) = \Delta Z(n) \cdot Cos\left( \beta_{Dk} \right) - \Delta Y(n) \cdot Sin\left( \beta_{Dk} \right),$$

while: $D \square |dZ|, |dY|$.

**Step 140:** determining by the server increments of displacement coordinates of the air vehicle by a criterion of the mean square error of approximation for approximating the range increments computed earlier.

At the next step, the increments of the coordinates of the airvehicle displacement are determined.

The increments of the coordinates of the air vehicle displacement $\Delta Y(n)$ and $\Delta Z(n)$ are determined in such a way as to best approximate the obtained series of estimates of the increments of the inclined range $\Delta D(n,k)$ by the criterion of the mean square of the approximation error.

On the basis of minimizing the quadratic form $W(\Delta Y(n),\Delta Z(n))$ with respect to the arguments $\Delta Y(n)$ and $\Delta Z(n)$ one obtains:

$$W\left(\Delta Y(n),\Delta Z(n)\right) = \frac{1}{K}\sum_{k=1}^{K}\left(\Delta D(n,k)-\left(\Delta Z(n,k)\cdot Cos\left(\varphi_{Dk}\right)-\Delta Y(n,k)\cdot Sin\left(\varphi_{Dk}\right)\right)\right)^2,$$

from the minimum condition $W(\Delta Y(n),\Delta Z(n))$:

$$\frac{\partial W}{\partial\left(\Delta Y\right)} = \frac{\partial W}{\partial\left(\Delta Z\right)} = 0,$$

a system of linear equations is obtained:

$$\begin{cases} a_{SE}\cdot\Delta Z(n)+b_{SE}\cdot\Delta Y(n)=c_{SE}; \\ d_{SE}\cdot\Delta Z(n)+e_{SE}\cdot\Delta Y(n)=f_{SE}, \end{cases}$$

$$a_{SE} = \left(\sum_{k=1}^{K}Cos^2\left(\beta_{Dk}\right)\right), \quad b_{SE} = -\left(\sum_{k=1}^{K}Sin\left(\beta_{Dk}\right)\cdot Cos\left(\beta_{Dk}\right)\right),$$

$$c_{SE} = \sum_{k=1}^{K}\left(\Delta D(n,k)\cdot Cos\left(\beta_{Dk}\right)\right),$$

$$d_{SE} = \left(\sum_{k=1}^{K}Sin\left(\beta_{Dk}\right)\cdot Cos\left(\beta_{Dk}\right)\right), \quad e_{SE} = -\left(\sum_{k=1}^{K}Sin^2\left(\beta_{Dk}\right)\right),$$

$$f_{SE} = \sum_{k=1}^{K}\left(\Delta D(n,k)\cdot Sin\left(\beta_{Dk}\right)\right),$$

Solving the system of linear equations by Cramer's direct computational method by means of a computer, the increments of the coordinates of the air vehicle displacement $\Delta Y(n)$ and $\Delta Z(n)$ are determined from the formulas:

$$\Delta Y(n) = \frac{\left(a_{SE}f_{SE}-c_{SE}d_{SE}\right)}{\det};$$

$$\Delta Z(n) = \frac{\left(c_{SE}e_{SE}-b_{SE}f_{SE}\right)}{\det};$$

where:

$$\det = \left(a_{SE}e_{SE}-b_{SE}d_{SE}\right),$$

In this case, the angle values by range $\beta_{Dk}$ are determined from the above formula (5).

The value of the determinant det (det≠0) does not depend on the number of the direct impulse, but is determined only by the value of the angles $\beta_{Dk}$.

The calculation of the increments of the air vehicle displacement coordinates, performed in the technical solution, may contain some errors, even in the absence of electronic noise. The fact is that the signal registered by the SAR is almost always formed with the chaotic addition of elementary signals, which in turn are formed by the dissipation of the probing emission from the SAR by elementary dissipaters of the earth surface with pseudorandom phases. Therefore, the signal registered by the SAR is a noise-like one. Such a signal has a randomly fluctuating frequency, and the increments of the phase, according to which the increments of the air vehicle displacements are estimated, fluctuate accordingly.

**Step 150:** determining by the server coordinates of displacement of the air vehicle by summing up all the previously determined increments of displacement coordinates of the air vehicle.

The coordinates of the air vehicle displacement $\hat{Y}(n)$ and $\hat{Z}(n)$ are determined by summing all the increments $\Delta Y(n)$ and $\Delta Z(n)$ obtained earlier:

$$\hat{Z}(0) = \hat{Y}(0) = 0 \text{ ,}$$

$$\hat{Z}(n) = \sum_{i=1}^{n} \Delta Z(i) \text{ ,} \quad \hat{Y}(n) = \sum_{i=1}^{n} \Delta Y(i) \text{ ,} \quad n = 1,...,(N-1) \text{ .}$$

The values of the estimates $Z(n)$ and $Y(n)$ obtained in the technical solution can be used, in particular, for calculating the corresponding values necessary for correcting the hologram elements:

• by phase:

$$\Delta\psi(n,m) = -\left(\frac{2\pi}{\lambda}\right) \cdot 2 \cdot \Delta D(n,m) \text{ ,} \qquad (9)$$

• and (its offset) by the reading number of the ADC (by range):

$$\Delta m(n,m) = -\frac{2 \cdot \Delta D(n,m)}{\left(c/f_{A\text{ЦП}}\right)} \text{ ,} \qquad (10)$$

where:

$\lambda$ - the wavelength of the probing emission;

$C$ - light velocity;

$f_{AU,\Pi}$ - sampling frequency of the ADC signal;

$\Delta D(n,m)$ - air vehicle displacement by range (caused by current values of orthogonal displacements of the air vehicle):

$$\Delta D(n,m) = Z(n) \cdot Cos(\beta_m) - Y(n) \cdot Sin(\beta_m) \text{ ,} \qquad (11)$$

$\beta_m$ - the angle by range, corresponding to the reading number of the ADC $m$:

$$\beta_m = \dfrac{Arc\cos\left(\dfrac{H}{D_m}\right)}{} \,, \tag{12}$$

$H$ - the altitude of the air vehicle above the earth surface;

$D_m$ - the slant range corresponding to the reading number of the ADC $\boxed{m}$ :

$$D_m = \dfrac{c \cdot t_Z}{2} + \dfrac{c}{2 \cdot f_{A\!\varPi\!\varPi}} \cdot m \,; \tag{13}$$

$t_Z$ - time delay from the moment of time of emission of the direct impulse of the radar and up to the first reading of the ADC signal ($m = 0$).

When calculating the coordinates of the air vehicle displacements from the formula, as shown earlier, summation (integration) of its increments is performed, as a result of which the error in determining the coordinates of the air vehicle displacements increases without limit with the increase of the number of the direct impulse of the radar. In other words, the (amplitude) spectrum of the coordinates of the air vehicle displacements has a so-called (1/$f$) feature at low frequencies, which can be eliminated with a high-frequency (HF) filter.

The procedure of subtraction of the mean values is essentially a HF-filter, which suppresses low frequencies in the air vehicle displacement coordinates.

In this technical solution, an economical computational form of the HF-filter implementation based on linear interpolation is used. The fact is that when a HF-filter is implemented in the form of a FIR filter, the size of its core is very large, and accordingly, the computational costs are greatly increased. The use of a computationally economical iterative IIR-filter in the invention is undesirable, due to the asymmetry of its impulse specification.

In some embodiments of the technical solution, the air vehicle displacement coordinates are also smoothed.

At this step, the "smoothing" procedure (from noise fluctuations) of the coordinates of the air vehicle displacements due to the low-frequency (LF) filtering of the values $\overset{\wedge}{Y}(n)$ and $\overset{\wedge}{Z}(n)$ is performed. As a result, "smoothed" estimates $\overset{\wedge}{Y}(n)$ and $\overset{\wedge}{Z}(n)$ are obtained:

$$\widehat{Y}(n) = \sum_{i=-I_{H\!\varPi}}^{+I_{H\!\varPi}} h_{H\!\varPi}(i) \cdot \hat{Y}(n+i) \,,$$

$$\widehat{Z}(n) = \sum_{i=-I_{H\!\varPi}}^{+I_{H\!\varPi}} h_{H\!\varPi}(i) \cdot \hat{Z}(n+i) \,,$$

where:

$$h_{H\!\varPi}(i)$$

- the coefficients of the symmetric core of the LF-filter of the size

$$\left(2 \cdot I_{H\!\varPi} + 1\right) .$$

(Pre) recommended parameters of the core of the LF-filter:

$$I_{HЧ} = 1,$$

$$h_{HЧ}(-1) = 0.25,$$

$$h_{HЧ}(0) = 0.5,$$

$$h_{HЧ}(+1) = 0.25.$$

The technical solution described above is a relatively non-complex, and can be used for the implementation on-board of the air vehicle in real time.

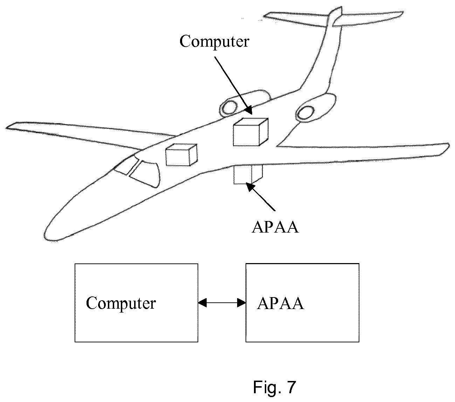

In the following, a hardware implementation of the estimation system for the air vehicle flight-path instabilities will be revealed, which implements the method described above and is schematically shown in Fig. 7.

The system comprises two components, integrated into a single unit or mutually independent: antenna complex with a receive/transmit analog highway and a computer for processing data that can be located on the server.

In this case, the antenna complex is mounted inside or outside the carrier in such a way as to provide a lateral view and thus to allow synthesis of the SAR aperture. The system comprises a signal generation and processing unit or a computer. This computer can be implemented as a 3U-VPX unit, known in the prior art, which has an active air cooling system, as well as a power supply system from the onboard voltage.

The computer includes at least one general purpose board and a high-performance MXM CUDA computing board. In some embodiments, the computer is implemented in the form of several 3U-VPX boards of the VITA-56 standard and is configured so as to:

- Control and manage the system operation;
- Interact based on external interfaces;
- Track the air vehicle telemetry;
- Process data.

The computer can perform the following functions: the formation of a signal at the frequency of the operation of the radar, the transmission of a signal to the APAA, the recording of the incoming signal from APAA, the compression (matched filtering) of the signal by the range and the recording of the result on the disk.

Also, the computer includes a disk subsystem that can be implemented as a 3U-VPX board of the VITA-56 standard. This subsystem comprises an array of solid-state disks connected by the NVME standard. The disk subsystem is designed for a long-term data storage (of the radio holograms and the results of its processing). The disk subsystem is designed to store various types of data to support the operation of the system. The disk subsystem can be implemented in the form of any type of volatile memory, on-volatile memory or a combination thereof, for example, static random access memory (SRAM), electrically erasable programmable read only memory (EEPROM), erasable programmable read only memory (EPROM), erasable programmable read only memory (EPROM), programmable read only memory (PROM), read only memory (ROM), magnetic memory, flash-memory, magnetic disk or optical disk and other, but not limited to.

Also, the computer may include an information input/output subsystem, which includes a 3U-VPX board of VITA-56 standard based on FPGA with a mezzanine module - a high-speed multichannel ADC. This subsystem is designed to digitize data, perform signal compression by range through the coordinated filtering implemented on the FPGA. Also, the subsystem performs the function of forming a code sequence for emission and monitors the operation of the subsystem for the formation and reception of HF-signals.

The computer may include a HF-signal generation/reception subsystem that can be implemented as a board that is designed in a 3U-VPX form factor. This subsystem conducts the formation of emitting pulses at a high frequency (10 GHz), and also conducts phase modulation of the signal (BPSK). In some embodiments, the subsystem performs the role of a preamplifier for transmission. In addition, it is responsible for reception and amplification of the response, demodulation and division into in-phase and quadrature components (I and Q components).

Also, the computer may comprise a power subsystem, telemetry system and external interfaces. This subsystem is designed to provide power to the entire complex. The input receives on-board power in a wide interval of values (18-76 V), at the output there is a stable constant voltage of all required ratings (+5, -5, +12, -12, +32).

The system for estimating the flight-path instabilities of the air vehicle comprises, in addition, the APAA antenna complex, which is made in the form of a specialized unit and comprises a frame, as well as a cooling subsystem (air, passive one).

The APAA antenna complex includes a control unit, which is designed to monitor the state of APAA equipment, control the operation cyclogram depending on the mode. It also provides interaction by the control channel with external devices.

The APAA antenna system includes a receive/transmit highway comprising an array of terminal amplifiers and an array of low-noise amplifiers. The receive/transmit highway is designed in the form of a set of receive/transmit modules (one for each of the APAA channels) and is designed to amplify the emitted and received signals for its correct processing.

Also, the APAA antenna complex contains a set of broadband emitters, which is made of aluminium by laser cutting.

The system additionally comprises an inertial navigation system based on MEMS sensors, which are a set of different sensors (MEMS) for acceleration, speed and orientation in space. The sensors are connected to a microcontroller, which ensures correct reading and smoothing of the data.

In an exemplary embodiment, the system may be implemented by one or more Specialized Integrated Circuits (SIS), Digital Signal Processor (DSP), Digital Signal Processing Devices (DSPDs), Programmable Logic Device (PLC), field-programmed micrologic circuit (FPGA), controller, microcontroller, microprocessor or other electronic components, and can be configured to implement a method for estimating the air vehicle flight-path instabilities.

The computer system for estimating the flight-path instabilities of the air vehicle may include a display interface that transmits graphics, text and other data for display, and may be a touch one. The touch screen of the display can usually display graphics (for example, a radio hologram) and text, and also provide a user interface (for example, a graphical user interface (GUI)) through which the user can interact with the system, for example, access and interact with the applications running in the system.

As will be understood by the person skilled in the prior art, the aspects of the present technical solution may be implemented in the form of a system, method or computer program product. Accordingly, various aspects of the present technical solution can be implemented solely as hardware, as software (including application software, etc.) or as an embodiment combining software and hardware aspects, which in general may be referred to as the "module", "system" or "architecture". In addition, some details of the implementation of this technical solution may take the form of a computer program product implemented on one or more machine-readable medium having a machine-readable program code that is implemented thereon.

Any combination of one or more machine-readable medium can also be used. The machine-readable medium of the data storage represent, without limitation, an electronic, magnetic, optical, electromagnetic, infrared or semiconductor system, a device, or any suitable combination thereof. More specifically, examples (non-exhaustive list) of a machine-readable storage medium include: electrical connection, using one or more wires, a portable computer floppy disk; hard disk, RAM, ROM, erasable programmable read-only memory (EPROM or Flash memory), fiber optic connection, CD-ROM, optical storage device, magnetic storage device or any combination of the above. In the context of this description, a machine-readable storage medium can be any flexible data medium that can include or store a program for use by the system, device, apparatus, or in conjunction therewith.

The program code embedded in the machine-readable medium can be transmitted by any medium, including, without limitation, wireless, wire, fiber optic, infrared, and any other suitable network or the combination of the above listed.

The computer program code for performing operations for the steps of this technical solution can be written in any programming language or combination of programming languages, including an object-oriented programming language such as Java, Smalltalk, C ++, and so on, and conventional procedural programming languages such as language programming "C" or similar programming languages. The program code can be executed on the system computer entirely, in part, or as a separate software package, partly on the local computer and partly on the remote computer, or completely on the remote computer. In the latter case, the remote computer can be connected to the local computer via an available network of any type, including a wide area network (WAN) or a connection to an external computer (for example, via the Internet using Internet providers)

The aspects of this technical solution have been described in detail with reference to block diagrams, circuit diagrams and/or diagrams of methods, devices (systems) and computer program products in accordance with embodiments of this technical solution. It should be noted that each block from the block diagram and/or diagrams, as well as combinations of blocks from the block diagram and/or diagrams, can be implemented by computer program instructions. These computer program instructions may be provided to a general-purpose computing processor, a special-purpose computer, or other data processing device to create a procedure in such a way that the instructions executed by the computer processor or other programmable data processing device create the means for implementing the functions/actions specified in the block(s) of a block diagram and/or a diagram.

These computer program instructions may also be stored on a machine-readable medium that can control a computer other than a programmable data processing device or other than devices that operate in a specific manner in such a way that instructions stored on a machine-readable medium create a device including instructions that perform the functions/actions specified in a block of the block diagram and/or the diagram.

USED SOURCES OF INFORMATION

1. J.R. ienup, Phase Error Correction by Shear Averaging, Signal Recovery and Synthesis III, digest of papers, Optical Society of America, pp. 134-137 (invited paper, N. Falmouth, MA, June 1989).
2. Douglas G. Thompson, James S. Bates, David V. Arnold, David G. Long, Adam Robertson, Range Dependent Phase Gradient Autofocus, Brigham Young University, 0-7803-4403-0/98/, 1998, IEEE.

**Claims**

1. A method for estimating flight-path instabilities of an air vehicle, comprising the steps of:

   • obtaining on at least one server at least one radio hologram from a radar, the radio hologram being represented by a two-dimensional array comprising columns of complex numbers;
   • estimating by the server phase increments for each pair of adjacent columns in the two-dimensional array;
   • computing range increments on the basis of the previously estimated phase increments for each pair of adjacent columns in the two-dimensional array;
   • determining by the server increments of displacement coordinates of the air vehicle by a criterion of the mean square error of approximation for approximating the range increments computed earlier;
   • determining by the server coordinates of displacement of the air vehicle by summing up all the previously determined increments of displacement coordinates of the air vehicle.

2. The method according to claim 1, **characterized in that** the method is carried out in a real-time mode.

3. The method according to claim 1, **characterized in that** a radio hologram is obtained from a disk subsystem configured to store radio holograms.

4. The method according to claim 1, **characterized in that** a radio hologram compressed by range is obtained after compression by range, or an initial hologram recorded by the synthetic aperture radar (SAR) is obtained.

5. The method according to claim 1, **characterized in that** the radio hologram is preliminarily compressed by range.

6. The method according to claim 1, **characterized in that** the server is installed locally on the air vehicle or remotely.

7. The method according to claim 1, **characterized in that** this method is carried out in a sequence of steps, wherein each step corresponds to an emission period of direct impulses of the SAR.

8. The method according to claim 1, **characterized in that**, when estimating phase increments for each pair of adjacent columns in the two-dimensional array, the Finap method is used.

9. The method according to claim 1, **characterized in that**, when determining the coordinates of displacement of the air vehicle, the coordinates of displacement of the air vehicle are smoothed against noise fluctuations.

10. The method according to claim 1, **characterized in that**, when determining the coordinates of displacement of the air vehicle, error accumulation effect is eliminated.

11. The method according to claim 1, **characterized in that** potential phase jumps by $2\pi$ are corrected after estimating the phase increments.

12. The method according to claim 1, **characterized in that**, when determining the coordinates of displacement of the air vehicle, low frequencies are suppressed in the air vehicle displacement coordinates.

13. A data processing system comprising means for carrying out the steps of the method according to any one of claims 1-12.

14. A computer program comprising instructions which, when the program is executed by a computer, cause the computer to carry out the steps of the method according to any one of claims 1-12.

Obtaining on at least one server at least one radio hologram from the radar, the hologram being a two-dimensional array consisting of complex numbers — 110

Estimating the phase increments for each two adjacent columns of the hologram, obtained at the previous step — 120

Computing the range increments on the basis of the estimates of the phase increments for the hologram, previously determined by the server — 130

Determining the increments of the coordinates of the displacement of the air vehicle by the criterion of the mean square of the approximation error in order to approximate the range increments obtained earlier — 140

Determining the coordinates of the air vehicle displacement by summing all the increments of the coordinates of the air vehicle displacement, obtained at the previous step — 150

Fig. 1

——— Source target path

– – – – Linear migration by range

——— Resulting target path

*a)*

——— Source target path

– – – – Migration fluctuations by range

——— Resulting target path

*б)*

Fig. 2

Fig. 3

$$G(n,m)$$

$$g(n-1,m),\ g(n,m)$$

Estimate of the phase
increments

$$\Delta\Phi(n,k),\quad k=1,\,2,\,...,\,K$$

Calculation of the range
increments

$$\Delta D(n,k),\quad k=1,\,2,\,...,\,K$$

Calculation of the
increments of the air vehicle
displacement coordinates

$$\Delta Y(n),\ \Delta Z(n)$$

Calculation of the air
vehicle displacement
coordinates

$$\hat{Y}(n),\ \hat{Z}(n)$$

Smoothing of the air vehicle
displacement coordinates

$$\widehat{Y}(n),\ \widehat{Z}(n)$$

Elimination of the error
accumulation effect

$$Y(n),\ Z(n)$$

Fig. 4

Fig. 5

Phase estimate

Right results of phase jump
correction

$+\pi$ - - - - - - - - - - - - - - - - - - - - - - - - - - - - - - - - - - - - - - - - - - - - - - - -
                                *         *
                  *                          *

Phase estimate number

         1            2           3

$-\pi$ - - - - - - - - - - - - - - - ✗ - - - - - - - - - - - - - - - - - - - - - - - - - - - - - - - -
          ✗                          ✗

Wrong results of phase jump
correction

Fig. 6

22

Computer

APAA

| Computer | ←→ | APAA |

Fig. 7

Hologram

Hologram readings by slant range
(ADC readings) and by azimuth – impulse number

Air vehicle position at the moment
of the next direct impulse

Slant range

Direction of flight

Fig. 8

**EP 3 657 211 A1**

Europäisches
Patentamt
European
Patent Office
Office européen
des brevets

**EUROPEAN SEARCH REPORT**

Application Number

EP 18 20 7244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI PU ET AL: "A residual range cell migration correction algorithm for SAR based on low-frequency fitting", 2015 IEEE RADAR CONFERENCE (RADARCON), IEEE, 10 May 2015 (2015-05-10), pages 1300-1304, XP032788543, DOI: 10.1109/RADAR.2015.7131196 [retrieved on 2015-06-22] * abstract * * paragraph [0III] * | 1-14 | INV. G01S13/90 |
| A | ZORAN SJANIC ET AL: "Navigation and SAR auto-focusing based on the phase gradient approach", INFORMATION FUSION (FUSION), 2011 PROCEEDINGS OF THE 14TH INTERNATIONAL CONFERENCE ON, IEEE, 5 July 2011 (2011-07-05), pages 1-8, XP032008820, ISBN: 978-1-4577-0267-9 * abstract * | 1 | |
| A | ANDREAS REIGBER ET AL: "Very-High-Resolution Airborne Synthetic Aperture Radar Imaging: Signal Processing and Applications", PROCEEDINGS OF THE IEEE, IEEE. NEW YORK, US, vol. 101, no. 3, 1 March 2013 (2013-03-01), pages 759-783, XP011494143, ISSN: 0018-9219, DOI: 10.1109/JPROC.2012.2220511 * abstract * * paragraphs [0III] - [000C] * | 1 | TECHNICAL FIELDS SEARCHED (IPC) G01S |

The present search report has been drawn up for all claims

| Place of search | Date of completion of the search | Examiner |
|---|---|---|
| Munich | 8 May 2019 | Alberga, Vito |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.R. IENUP.** Phase Error Correction by Shear Averaging, Signal Recovery and Synthesis. Optical Society of America, June 1989, vol. III, 134-137

- **DOUGLAS G. THOMPSON ; JAMES S. BATES ; DAVID V. ARNOLD ; DAVID G. LONG ; ADAM ROBERTSON.** Range Dependent Phase Gradient Autofocus. Brigham Young University, 1998